(19) Europäisches Patentamt
European Patent Office
Office européen des brevets

(11) **EP 4 742 305 A1**

(12) **EUROPEAN PATENT APPLICATION**

(43) Date of publication:
**13.05.2026 Bulletin 2026/20**

(21) Application number: **24211757.0**

(22) Date of filing: **08.11.2024**

(51) International Patent Classification (IPC):
**H01M 4/04** *(2006.01)*

(52) Cooperative Patent Classification (CPC):
**H01M 4/0435**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **LG Energy Solution, Ltd.**
**Seoul 07335 (KR)**

(72) Inventors:
• **CHOI, Jin Hyeong**
  **34122 Daejeon (KR)**
• **HONG, Jong Hyuk**
  **34122 Daejeon (KR)**
• **LEE, Gyu Sun**
  **34122 Daejeon (KR)**

(74) Representative: **BCKIP Part mbB**
**MK1**
**Landsbergerstraße 98, 3.Stock**
**80339 München (DE)**

Remarks:
Amended claims in accordance with Rule 137(2) EPC.

(54) **AN APPARATUS AND A METHOD FOR ROLL-PRESSING AN ELECTRODE SHEET, AND AN ELECTRODE SHEET MANUFACTURED BY THE METHOD**

(57) An apparatus for roll-pressing an electrode sheet is provided, wherein the electrode sheet has a coated portion in the middle along its width, extending in a longitudinal direction thereof and uncoated portions respectively positioned at both sides of the coated portion. The apparatus comprises: a stage on which the electrode sheet is to be placed; and a tab press roll configured to roll over one of the uncoated portions of the electrode sheet, for executing press work, wherein the tab press roll is configured, during the press work, to form a preset angle with respect to the stage, such that the tab press roll exerts less pressure at a side of the uncoated portion closer to the coated portion than the other side distant from the coated portion.

Fig. 4

EP 4 742 305 A1

## Description

## TECHNICAL FIELD

The present invention relates to an apparatus and a method for roll-pressing an electrode sheet, as well as an electrode sheet manufactured by the same method.

More particularly, the present invention relates to an apparatus for roll-pressing an electrode sheet capable of preventing the electrode sheet from being damaged during the roll-pressing process of the electrode sheet, or to be more specific, during the tab pressing process.

The present invention also relates to a method for roll-pressing an electrode sheet, according to which the electrode sheet can be prevented from damage resulting from a pressure exerted during the roll-pressing process of the electrode sheet, or to be more specific, during the tab pressing process.

Furthermore, the present invention also relates to an electrode sheet that is manufactured by the method for roll-pressing an electrode sheet, according to which the potential damage possibly resulting from a pressure exerted during the tab pressing process of the electrode sheet is avoided.

## BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

As the field of application for secondary batteries expands, the demand for higher-capacity secondary batteries is increasing rapidly. As a method of increasing the capacity of a secondary battery, research is being conducted on a technique for increasing the loading amount of the electrode mixture layer. However, if the loading amount of the electrode mixture layer is increased, a volume increase of the electrode sheet is induced. In order to reduce the volume of the electrode sheet, a process of rolling the electrode sheet with a higher pressure is required. However, during the rolling process with a high pressure, a defect may occur at lateral sides of the electrode sheet.

Accordingly, it would be advantageous to develop a technology capable of addressing the above technical problem, by preventing or reducing damages to an uncoated portion of an electrode sheet during the press work employing a tab press roll.

## SUMMARY OF THE INVENTION

The present invention has been made in view of the above problem of the related art. It is one of the objects of the present invention to provide an apparatus and a method for roll-pressing an electrode sheet, which can prevent an electrode sheet from being damaged during the press work, particularly due to a pressure applied to the uncoated portions of the electrode sheet.

One aspect of the present invention relates to an apparatus for roll-pressing an electrode sheet. The electrode sheet may have a coated portion in the middle along its width, extending in a longitudinal direction thereof and uncoated portions respectively positioned at both sides of the coated portion. The apparatus comprises a stage on which the electrode sheet is to be placed. The apparatus may further comprise a tab press roll configured to roll over one of the uncoated portions of the electrode sheet, for executing press work. Furthermore, the tab press roll may be configured, during the press work, to form a preset angle with respect to the stage, such that the tab press roll exerts less pressure at a side of the uncoated portion closer to the coated portion than the other side distant from the coated portion.

Accordingly, the present invention enables to prevent or reduce a damage when a tab-pressing is performed on an uncoated portion of the electrode sheet by exerting less pressure at a portion of the uncoated portion adjacent to the coated portion.

The electrode sheet to be subject to the roll-pressing by the apparatus may have a structure in which an electrode mixture layer is coated on one side or both sides of a current collector layer. To be specific, the electrode mixture layer may be a slurry containing an active material, a binder, and a solvent, wherein the active material is a component that undergo electrochemical reactions to store and release energy during the charge and discharge cycles in the secondary battery. The current collector layer may be a thin metal foil designed to conduct electric current between an electrochemical active material and an external circuit of the battery.

In the process of coating the electrode mixture on the current collector layer, the electrode mixture layer may be coated onto the current collector layer to a desired thickness in a desired area. The coated portion may be positioned in the middle of the electrode sheet along its width, extending in a longitudinal direction thereof, and the uncoated portion may be positioned, e.g., at both sides of the coated portions. For example, the slurry may be spread evenly across the surface of the current collector layer by a blade, or the slurry may be extruded through a narrow slot die onto the moving current collector layer so that the coated portion extends longitudinally along the direction of the moving collector layer. However, the coating method is not limited thereto. The current collector may be dipped into the slurry and then withdrawn at a controlled speed. Otherwise, the slurry may be atomized and sprayed onto the current collector.

After coating the electrode mixture layer on the current collector layer, a roll-pressing may be performed on the electrode sheet, in order for increasing density of the coated electrode mixture layer. This process is typically called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

The apparatus for drying and pressing may include a pressure-and-heat-exerting roller and a stage to support the electrode sheet thereon, so that the roller can roll and perform the drying and pressing process on the electrode sheet. Instead of the stage, however, the roller can be provided as a pair, so that the pair of rollers rotate with respect to each other having the electrode sheet sandwiched therebetween. During the press work of pressing the electrode sheet with a high pressure by the roller, a swelling may occur at lateral sides of the electrode sheet, particularly at the uncoated portions thereof, which causes an increase in the process defect rate. In order to prevent this, the press work employs one or more tab press rolls for roll-pressing the uncoated portion(s). The uncoated portions of the electrode sheet are pressed by a pair of tab press rolls, respectively provided at both lateral sides of the coated portion of the electrode sheet.

In the apparatus, a preset angle, which is larger than zero degree, may be determined such that a boundary of a contact surface between the tab press roll and the uncoated portion, which is closest to the uncoated portion, still maintains the contact during the tab-pressing. While the tab-pressing is performed, the opposite boundary of the contact surface between the tab press roll and the uncoated portion, which is farthest from the coated portion, may be located slightly under the upper surface of the stage, because that part of the stage is elastically deformed by the downward pressure exerted by the tab press roll.

According to an embodiment of the present invention, the tab press roll may have a truncated cone shape.

For example, the tab press roll may have a shape of a cone section or pyramid lacking an apex and terminating in a plane parallel to the base. The base of the truncated cone shape is perpendicular to a rolling axis of the tab press roll. The central rolling axis of the tab press roll may be set parallel with respect to the stage. The tab press roll, due to its exterior shape, forms the preset angle with respect to the stage, while maintaining its rolling axis parallel to the stage.

According to an embodiment of the present invention, the tab press roll may have a cylindrical shape and may be configured to, during the press work, be applied on the electrode sheet maintaining the preset angle with respect to the stage.

For example, during the press work, i.e., the tab pressing, the curved surface of the tab press roll may be applied on the uncoated portion of the electrode sheet maintaining the preset angle.

According to an embodiment the present invention, a side of the tab press roll to be positioned closest to the coated portion during the press work may be rounded or chamfered.

Accordingly, the above configurations of the tab press roll prevent the uncoated portion from being damaged by a sudden pressure difference at the boundary of a contact surface between the tab press roll and the uncoated portion, which is adjacent to the coated portion.

According to an embodiment of the present invention, the tab press roll may have a concave-convex pattern on a surface thereof contacting the electrode sheet during the press work.

For example, the depth of a pattern transferred on the uncoated portion by the concave-convex pattern is to be less than the height of the concave-convex pattern itself. In this case, the preset angle between the curved surface of the tab press roll and the stage may be determined based on a length of the curved surface of the tab press roll and the height of the concave-convex pattern. By doing so, the boundary of the contact surface between the tab press roll and the uncoated portion, which is closest to the coated portion, may maintain its contact during the tab pressing.

According to an embodiment of the present invention, the apparatus may further comprise another tab press roll for tab-pressing the uncoated portion of the electrode sheet from an opposite side of the tab press roll. Herein, the tab press roll and the another tab press roll may be configured to engage each other having the electrode sheet interposed therebetween.

Therefore, such a combined use of tab press rolls at both top and bottom surfaces of the electrode sheet may be advantageous, particularly in case the electrode sheet is coated with an electrode mixture layer on both top and bottom surfaces. However, the employment of top and bottom tab press rolls is not limited to such a double-side coated electrode sheet.

According to an embodiment of the present invention, the another tab press roll may be configured, during the press work, to form a preset angle with respect to the stage. The another tab press roll may exert less pressure at a side of the uncoated portion closer to the coated portion than the other side distant from the coated portion.

A further aspect of the present invention is directed to a method for roll-pressing an electrode sheet. The electrode sheet may have a coated portion in the middle along its width, extending in longitudinal direction thereof and uncoated portions respectively positioned at both sides of the coated portion. The method may comprise placing the electrode sheet on a stage. The method may further comprise executing press work by roll pressing one of the uncoated portions of the electrode sheet by a tab press roll. According to the present invention, during the press work, the tab press roll may be applied on the electrode sheet forming a preset angle with respect to the stage, such that the tab press roll exerts less pressure at a side of the uncoated portion closer to the coated portion than the other side distant from the coated portion.

According to an embodiment of the present invention, the tab press roll may have a truncated cone shape and, during the press work, the tab press roll may be applied on the electrode sheet with its rotational axis parallel with the stage.

According to an embodiment of the present invention, the tab press roll may have a cylindrical shape and, during the press work, the tab press roll may be applied on the electrode sheet with its rotational axis maintaining the preset angle with respect to the stage.

According to an embodiment of the present invention, during the press work, the tab press roll may impart a concave-convex pattern on the uncoated portion of the electrode sheet.

According to an embodiment of the present invention, the method may further comprise: executing press work by roll pressing the uncoated portion of the electrode sheet using another tab press roll from an opposite side of the tab press roll. Herein, the tab press roll and the another tab press roll may engage each other having the electrode sheet interposed therebetween.

According to an embodiment of the present invention, during the press work, the another tab press roll may be applied on the electrode sheet forming a preset angle with respect to the stage. The another tab press roll may exert less pressure at a side of the uncoated portion closer to the coated portion than the other side distant from the coated portion.

According to another aspect of the present invention, an electrode sheet is provided that is manufactured by the method for roll-pressing an electrode sheet. The electrode sheet may have a coated portion in the middle along its width, extending in a longitudinal direction thereof and uncoated portions respectively positioned at both sides of the coated portion. The electrode sheet includes a tab formed of the uncoated portion, having been subject to the press work. Preferably, the tab is devoid of a line pattern extending in a width direction thereof and delimiting one side of the tab from the other side by a height.

According to an embodiment of the present invention, the tab may have a pattern formed on a surface thereof, the pattern having a depth continuously changing depending on a distance to the coated portion of the electrode sheet.

According to an embodiment of the present invention, the depth of the pattern may be shallower at a portion closer to the coated portion than at a portion farther from the coated portion 120.

When roll-pressing an electrode sheet by an apparatus in accordance with the present invention, a damage can be prevented or reduced because less pressure is exerted on the side of the uncoated portion during the press work.

**BRIEF DESCRIPTION OF THE DRAWINGS**

For a more complete understanding of the present invention and advantages thereof, reference is now made to the following description taken in conjunction with the accompanying drawings. The invention is explained in more detail below using exemplary embodiments, which are specified in the schematic figures of the drawings, in which:

| | |
|---|---|
| Fig. 1 | schematically illustrates a plan view of roll-pressing an electrode sheet in accordance with the related art. |
| Fig. 2 | schematically illustrate a cross-sectional view, seen from a lateral side, of roll-pressing an electrode sheet in accordance with the related art. |
| Fig. 3 | is a photograph showing an electrode sheet damaged during the press work using an apparatus according to the related art. |
| Fig. 4 | is a schematic illustration of an apparatus for roll-pressing an electrode sheet in accordance with an embodiment of the present invention. |
| Figs. 5(a) and 5(b) | are respectively enlarged partial views of two variations of a tab press roll for tab-pressing an uncoated portion of the electrode sheet, in accordance with the embodiment of Fig. 4. |
| Fig. 6 | is a cross-sectional view, taken along the direction A-A', of a tab press roll for tab-pressing an un- |

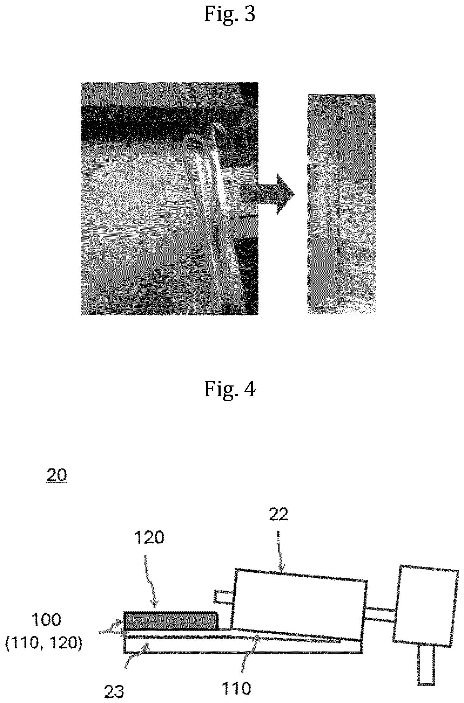

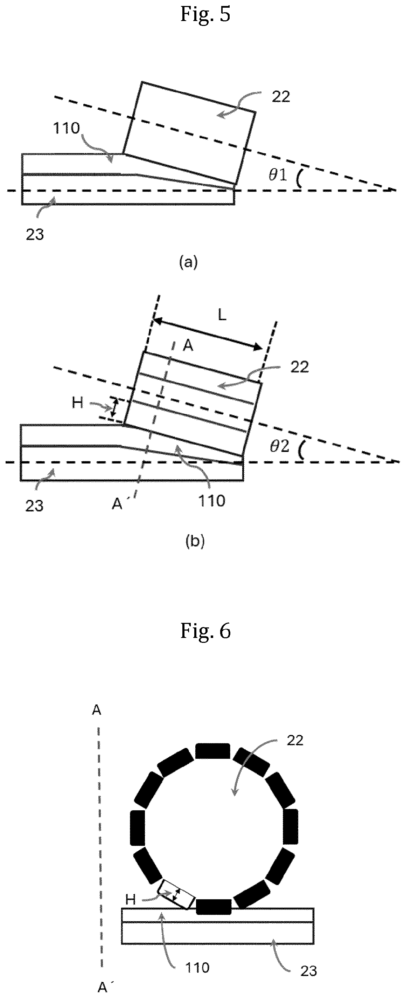

coated portion, in accordance with the embodiment of Figs. 4 and 5.

Figs. 7(a) and 7(b)      are respectively schematic illustrations of two variations of a tab press roll for tab-pressing an uncoated portion in accordance with another embodiment of the present invention.

Fig. 8      is a schematic illustration of a cross-sectional view of a tab press roll for an uncoated portion in accordance with yet another embodiment of the present invention.

Fig. 9      schematically illustrates a cross-sectional view, seen from a lateral side, of an apparatus for roll-pressing an electrode sheet in accordance with an embodiment of the present invention.

Figs. 10(a) to 10(c)      are schematic illustrations of an apparatus for roll-pressing an electrode sheet in accordance with an embodiment of the present invention.

## DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed thereinbetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, an apparatus and a method for roll-pressing an electrode sheet in accordance with the present invention will be described in detail with reference to the accompanying drawings.

An electrode sheet 100 may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a cathode active material. For example, one or more of graphite, lithium titanate, and silicon-based materials may be used as an anode active material.

The current collector layer may be a thin metal foil designed to conduct electric current between an electrochemical active material and an external circuit of the battery. For example, an aluminum layer may be is used for the cathode current collector, while a copper layer may be used for the anode current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

The apparatus for drying and pressing may include a pressure and heat exerting roller and a stage to support the electrode sheet thereon, so that the roller can roll and perform the drying and pressing process on the electrode sheet. Instead of the stage, however, the roller can be provided as a pair, so that the pair of rollers rotate with respect to each other having the electrode sheet sandwiched therebetween.

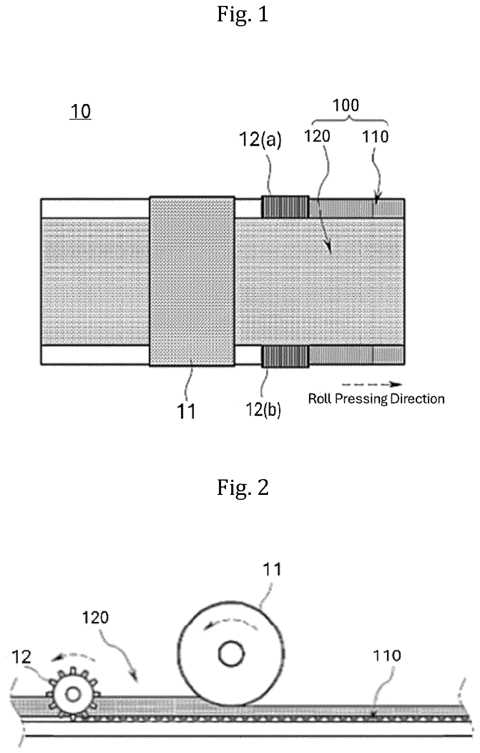

Figs 1 and 2 are schematic diagrams which show a press work for an electrode sheet in accordance with a related art. Referring to Figs. 1 and 2, an electrode sheet 100 having a structure in which electrode mixture layers are coated on a surface of a current collector layer made of aluminum foil undergoes a press work while passing through a press roll 11. Through the press work of the electrode sheet 100, density of the electrode mixture layer is increased, while volume is decreased. However, during the press work of pressing the electrode sheet 100 with a high pressure by the press roll 11, a swelling may occur at lateral sides of the electrode sheet 100, particularly at the uncoated portions 110 thereof, which causes an increase in the process defect rate.

In order to prevent this, the press work employs one or more tab press rolls 12(a) and 12(b) for rolling-pressing uncoated portion(s) 110, as shown in Figs 1 and 2. The uncoated portions 110 of the electrode sheet 100 are pressed by a pair of tab press rolls 12(a) and 12(b), respectively provided at both lateral sides of the coated portion 120 of the electrode sheet.

However, when the uncoated portions 110 are roll-pressed by the tab press rolls 12(a) and 12(b), an unexpected damage may occur at a side of the uncoated portion 110 that is close to the coated portion 120, where the outermost circumferential part of the tab press roll 12 has contacted during the tab pressing process. Fig. 3 shows an example of an uncoated portion of an electrode sheet damaged by the tab press roll during the tab press work.

Fig. 4 schematically illustrates an apparatus 20 for roll-pressing an electrode sheet 100 in accordance with one embodiment of the present invention.

The electrode sheet 100 may include a coated portion 120 in the middle along its width, extending in a longitudinal direction thereof and uncoated portions 110 respectively positioned at both sides of the coated portion 120 (In Fig. 4, only one lateral side is shown). The electrode sheet 100 may have the coated portion 120 either on one surface thereof or on both top and bottom surfaces. The electrode sheet 100 is disposed on a stage 23 to be explained below in detail.

The roll-pressing apparatus 20 may include a (not shown) roller for roll-pressing the central portion, i.e., the coated portion 120, of the electrode sheet 100. In addition, the roll-pressing apparatus 20 of the present embodiment may include a tab press roll 22 configured to roll over the uncoated portion 110 of the electrode sheet 100, for executing a tab press work. The tab press roll 22 may be provided as a pair, respectively at opposite sides of the coated portion 120 for respective uncoated portions 110. The roll-pressing apparatus 20, for example, includes a stage 23 on which the electrode sheet 100 is to be placed for being subject to the press work. The stage 23 is formed by a material with a certain degree of elasticity, such that it can deform during the press work, in conformity with the movement of the roller and the tab press roll 22 thereon.

The present invention is, however, not limited to the above configuration including the stage 23, on which the press roll and the tab press roll 22 are arranged to respectively perform the roll-pressing and the tab pressing. For example, the press roll for roll-pressing the central portion may be provided as a pair, one on top of the coated portion 120 of the electrode sheet 100 and the other underneath the coated portion 120 of the electrode sheet 100. The pair of press rolls may make a rolling movement relative to each other, having the uncoated portion 120 of the electrode sheet 100 interposed therebetween. In case of this embodiment, the above-described stage 23 would not be required. Additionally, or alternatively, the tab press roll 22 for roll-pressing the peripheral, uncoated portion of the electrode sheet 100 may be provided as a pair, one on top of the uncoated portion 110 and the other underneath the uncoated portion 110. The pair of tab press rolls 22 may roll relative to each other, having the uncoated portion 110 sandwiched therebetween. In this case, the stage 23 would either not be required, or may be sized smaller such that only the coated portion 120 of the electrode sheet 100 can be placed thereon, the uncoated portion(s) 110 being positioned outside of the realm of the stage 23.

The roll-pressing apparatus 20 of the present embodiment comprises configurations for exerting less pressure at a side of the uncoated portion 110 closer to the coated portion 120 than the other side distant from the coated portion 120. Due to such a configuration, less pressure is exerted on the side of the uncoated portion

110 closer to the coated portion 120 during the press work. Hence, a damage can be prevented or reduced when a tab-pressing is performed on an uncoated portion of an electrode sheet by an apparatus in accordance with the present invention.

According to Fig. 5(a), the cylinder-shaped tab press roll 22 is postured so as to form a preset angle θ1 with respect to the stage 23. During the press work - i.e., tab-pressing - the curved surface of the tab press roll 22 is applied on the uncoated portion 110 of the electrode sheet 100 maintaining the preset angle θ1. This configuration prevents the uncoated portion 110 from being damaged by a sudden pressure difference at the boundary of a contact surface between the tab press roll 22 and the uncoated portion 110, which is close to the coated portion 120. The preset angle θ1 may be determined such that the boundary of the contact surface between the tab press roll 22 and the uncoated portion 110, which is closest to the coated portion 120, still maintains the contact during the tab-pressing. In other words, the contact between the tab press roll 22 and the uncoated portion 110 needs to be maintained throughout the entire width of the tab press roll 22. While the tab-pressing is performed, the opposite boundary of the contact surface between the tab press roll 22 and the uncoated portion 110, which is farthest from the coated portion 120, is located slightly under the upper surface of the stage 23, because that part of the stage 23 is elastically deformed by the downward pressure exerted by the tab press roll 22.

The tab press roll 22 may further have a concave-convex pattern on the curved surface thereof, as shown in Fig. 6. According to 5(b), the depth of a pattern transferred on the uncoated portion 110 by the concave-convex pattern is to be less than the height H of the concave-convex pattern itself. In this case, the preset angle θ2 between the curved surface of the tab press roll 22 and the stage 23 may be determined based on the length L of the curved surface of the tab press roll 22 and the height H (or depth) of the concave-convex pattern. The maximum value of the preset angle θ2 may be calculated as an arctangent of the height H over the length L, as represented by the following formula.

$$\theta2 = \tan^{-1}(H/L),$$

H: pattern height, L: length/width of the curved surface of the tab press roll

By doing so, the boundary of the contact surface between the tab press roll 22 and the uncoated portion 110, which is closest to the coated portion 120, may maintain its contact during the tab pressing. For example, if the length L is 15 mm and the pattern height H is 1 mm, the preset angle θ2 may be set not larger than 3.8 degree.

The material of the tab press roll 22 may be selected from any material having a certain degree of elasticity, insofar as it can fulfill the above objects without damaging the uncoated portion of the electrode sheet. For example, the tab press roll 22 may be made of urethane.

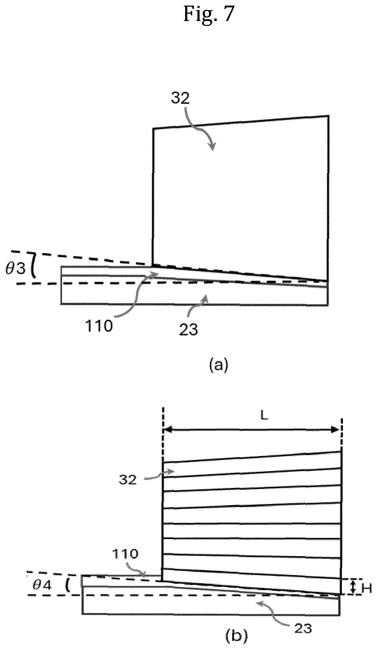

Fig. 7(a) schematically shows a tab press roll 32 in accordance with another embodiment of the present invention, having a truncated cone shape. For example, the tab press roll 32 has a shape of a cone section or pyramid lacking an apex and terminating in a plane parallel to the base. The base of the truncated cone shape is perpendicular to a rolling axis of the tab press roll 32. In this embodiment, a central, rolling axis of the tab press roll 32 may be set parallel with respect to the stage 23. Nevertheless, the tab press roll 32, due to its exterior shape, forms a preset angle θ3 with respect to the stage 23, while maintaining its rolling axis parallel to the stage 23.

The preset angle θ3 may be determined such that the boundary of the contact surface between the tab press roll 32 and the uncoated portion 110, which is closest to the coated portion 120, maintains the contact. In other words, the contact between the tab press roll 32 and the uncoated portion 110 needs to be maintained throughout the entire width of the tab press roll 32. While the tab-pressing is performed, the opposite boundary of the contact surface between the tab press roll 32 and the uncoated portion 110, which is farthest from the coated portion 120, is located slightly under the upper surface of the stage 23, because that part of the stage 23 is elastically deformed by the downward pressure exerted by the tab press roll 32.

The truncated cone-shaped tab press roll 32, just like in Fig. 6, may further have a concave-convex pattern on its curved surface which is to contact the electrode sheet 100 - or an uncoated portion thereof, to be exact - during the tab-pressing process. The truncated cone-shaped tab press roll 32 may be preferably made of urethane.

Referring to Fig. 7(b), the preset angle θ4 of the truncated cone-shaped tab press roll 32 with a concave-convex pattern may be set by taking into account the length or width L of the tab press roll 32 and the height or depth H of the concave-convex pattern. The maximum value of the preset angle θ4 may be calculated as an arctangent of the height H over the length L, as represented by the following formula.

$$\theta2 = \tan^{-1}(H/L),$$

H: pattern height, L: length/width of the curved surface of the tab press roll

For example, if the length L of the tab press roll 32 is 15 mm and the pattern height H is 1 mm, the preset angle θ4 may be set not larger than 3.8 degree.

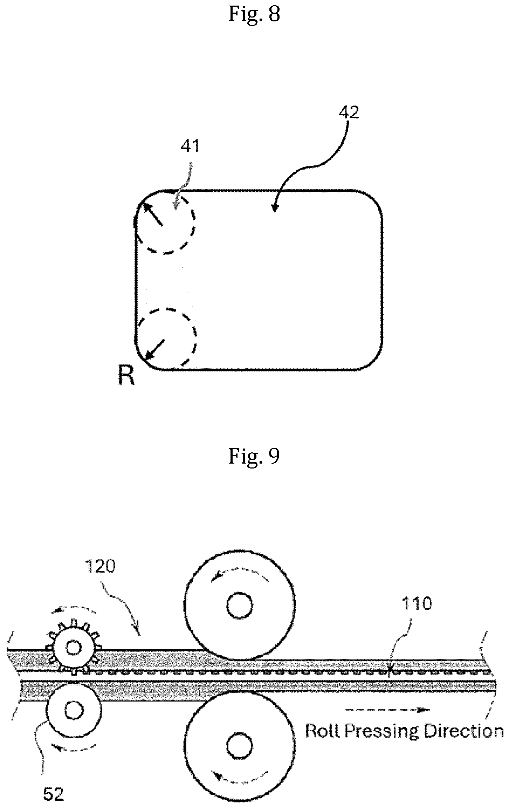

Fig. 8 schematically shows a tab press roll 42 for tab-pressing an uncoated portion of an electrode sheet, in accordance with yet another embodiment of the present invention. According to this embodiment of the invention, the tab press roll 42 may have a rounded or chamfered portion 41 at an edge and/or a corner thereof which is to contact the electrode sheet. The rounded or the chamfered portion 41 of tab press roll 42 may prevent or reduce damages caused by a sudden pressure difference at the boundary of contact surface between the tab press roll 42 and the uncoated portion 110, closest to the coated portion 120. The curvature of radius of the rounded portion 41 may be approximately 1 mm. The tab press roll 42 of the present embodiment may have a cylindrical shape, a truncated cone shape, or any other shape, insofar as the tab press roll 42 has a rounded or chamfered portion 41 at an edge and/or a corner thereof and can fulfill the above-described functions, without damaging the uncoated portion of the electrode sheet.

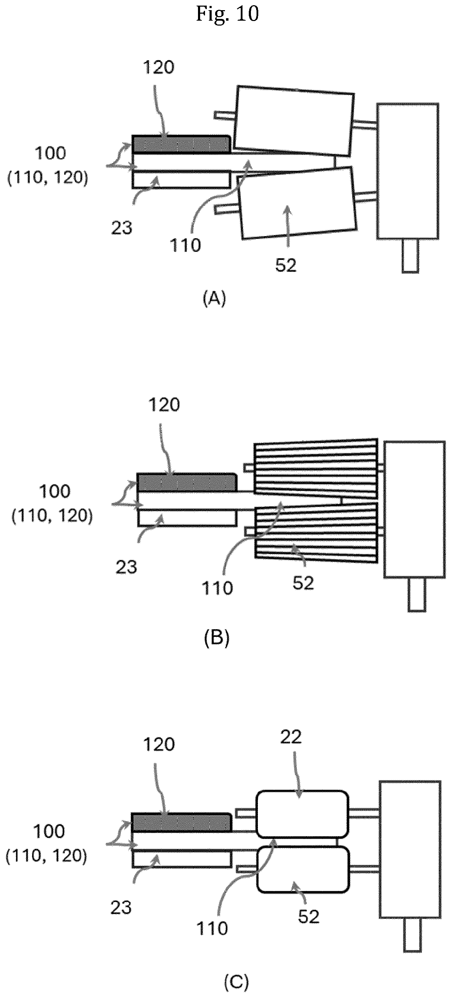

In accordance with an embodiment of the present invention, a second tab press roll 52 for tab-pressing an uncoated portion of the electrode sheet 110 from the bottom surface of the electrode sheet may be additionally provided under the stage 23; see Figs. 9 and 10. The second tab press roll 52 may be placed opposite to any one of the above-discussed tab press rolls 22, 32, 42, which is positioned on the top surface of the electrode sheet 100, so that the top and the bottom press rolls can engage each other. By cooperating with any one of the above-discussed tab press rolls 22, 32, 42, the second tab press roll 52 may carry out a roll-pressing on the back side of the electrode sheet 100, or to be more specific, a tab-pressing on the back surface of the uncoated portion 110.

Such a combined use of tab press rolls at both top and bottom surfaces of the electrode sheet 100 may be advantageous, particularly in case the electrode sheet 100 is coated with an electrode mixture layer on both top and bottom surfaces. However, the employment of top and bottom tab press rolls is not limited to such a double side-coated electrode sheet.

The second tab press roll 52 may be configured like any one of the tab press rolls 22, 32, 42 in accordance with the above-discussed embodiments. The second tab press roll 52 may or may not have a preset angle with respect to the stage 23, or the surface of the electrode sheet 100 to be roll-pressed, insofar as the countering tab press roll positioned on the upper surface of the electrode sheet 100 (hereinafter, referred to as a first press roll) has a preset angle with respect to the stage 23. Moreover, the second tab press roll 52 may have a preset angle that is different from that of the first tab press roll 22, 32, 42 positioned above the stage 23.

The second tab press roll 52 may have a concave-convex pattern on its circumferential surface that is to contact the back surface of the electrode sheet 100. The concave-convex patterns formed on the first tab press roll 22, 32, 42 and the second tab press roll 52 may or may not be identical. In case the two concave-convex patterns are not identical, patterns transferred on the top and the bottom surface of the electrode sheet 100, as a result, would not coincide with each other. For example, only one of the top and bottom surfaces of the uncoated portion 110 of the electrode sheet 100 may have a pattern to prevent or reduce damages.

According to an aspect of the present invention, a method for roll-pressing an electrode sheet first places an electrode sheet 100, for example, on a stage 23 and then executes press work - a tab pressing, to be specific - by roll pressing one or more of the uncoated portions 110 of the electrode sheet 100 by a tab press roll 22, 32, 42, 52. During the press work, the tab press roll 22, 32, 42, 52 is applied on the electrode sheet 100 forming a preset angle with respect to the stage 23, such that the tab press roll 22, 32, 42, 52 exerts less pressure at a side of the uncoated portion 110 closest to the coated portion 120, where an edge of the tab press roll 22 contacts.

According to another aspect of the present invention, an electrode sheet 100 is provided that is manufactured by the method for roll-pressing an electrode sheet. The electrode sheet may have a coated portion 120 in the middle along its width, extending in a longitudinal direction thereof and uncoated portions 110 respectively positioned at both sides of the coated portion 120. The electrode sheet 100 includes a tab formed of the uncoated portion 110, having been subject to the press work. Preferably, the tab is devoid of a line pattern that extends in a width direction thereof, delimiting one side of the tab from the other side by a height.

According to an embodiment of the present invention, the tab may have a pattern formed on a surface thereof, the pattern having a depth continuously changing depending on a distance to the coated portion 120 of the electrode sheet 100.

According to an embodiment of the present invention, the depth of the pattern may be shallower at a portion closer to the coated portion 120 than at a portion farther from the coated portion 120.

Although specific embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

## LIST OF REFERENCE SIGNS

10, 20    apparatus for roll-pressing an electrode sheet

| 11 | press roll for a coated portion |
|----|----|
| 12 | tab press roll |
| 22 | tab press roll |
| 23 | stage |
| 32 | tab press roll |
| 41 | rounded or chamfered portion |
| 42 | tab press roll |
| 52 | second tab press roll |
| 100 | electrode sheet |
| 110 | uncoated portion |
| 120 | coated portion |

**Claims**

1. An apparatus for roll-pressing an electrode sheet, wherein the electrode sheet has a coated portion in the middle along its width, extending in a longitudinal direction thereof and uncoated portions respectively positioned at both sides of the coated portion, wherein the apparatus comprises:

   a stage on which the electrode sheet is to be placed; and
   a tab press roll configured to roll over one of the uncoated portions of the electrode sheet, for executing press work,
   wherein the tab press roll is configured, during the press work, to form a preset angle with respect to the stage, such that the tab press roll exerts less pressure at a side of the uncoated portion closer to the coated portion than the other side distant from the coated portion.

2. The apparatus of claim 1, wherein the tab press roll has a truncated cone shape.

3. The apparatus of claim 1, wherein the tab press roll has a cylindrical shape and is configured to, during the press work, be applied on the electrode sheet maintaining the preset angle with respect to the stage.

4. The apparatus of any one of the preceding claims, wherein a side of the tab press roll to be positioned closest to the coated portion during the press work is rounded or chamfered.

5. The apparatus of any one of the preceding claims, wherein the tab press roll has a concave-convex pattern on a surface thereof contacting the electrode sheet during the press work.

6. The apparatus of any one of the preceding claims, further comprising another tab press roll for tab-pressing the uncoated portion of the electrode sheet from an opposite side of the tab press roll, wherein the tab press roll and the another tab press roll are configured to engage each other having the electrode sheet interposed therebetween.

7. The apparatus of claim 6, wherein the another tab press roll is configured, during the press work, to form a preset angle with respect to the stage, such that the another tab press roll exerts less pressure at a side of the uncoated portion closer to the coated portion than the other side distant from the coated portion.

8. A method for roll-pressing an electrode sheet, wherein the electrode sheet has a coated portion in the middle along its width, extending in a longitudinal direction thereof and uncoated portions respectively positioned at both sides of the coated portion, wherein the method comprising:

   placing the electrode sheet on a stage; and
   executing press work by roll pressing one of the uncoated portions of the electrode sheet by a tab press roll,
   wherein during the press work, the tab press roll is applied on the electrode sheet forming a preset angle with respect to the stage, such that the tab press roll exerts less pressure at a side of the uncoated portion closer to the coated portion than the other side distant from the coated portion.

9. The method of claim 8, wherein the tab press roll has a truncated cone shape and, during the press work, the tab press roll is applied on the electrode sheet with its rotational axis parallel with the stage.

10. The method of claim 9, wherein the tab press roll has a cylindrical shape and, during the press work, the tab press roll is applied on the electrode sheet with its rotational axis maintaining the preset angle with respect to the stage.

11. The method of any one of the preceding claims, wherein, during the press work, the tab press roll imparts a concave-convex pattern on the uncoated portion of the electrode sheet.

12. The method of any one of the preceding claims, further comprising:

executing press work by roll pressing the uncoated portion of the electrode sheet using another tab press roll from an opposite side of the tab press roll, wherein the tab press roll and the another tab press roll engage each other having the electrode sheet interposed therebetween, and

wherein during the press work, the another tab press roll is applied on the electrode sheet forming a preset angle with respect to the stage, such that the another tab press roll exerts less pressure at a side of the uncoated portion closer to the coated portion than the other side distant from the coated portion.

13. An electrode sheet manufactured by the method of claims 8 to 12, comprising

a coated portion in the middle along its width, extending in a longitudinal direction thereof, uncoated portions respectively positioned at both sides of the coated portion, and

a tab formed of the uncoated portion, having been subject to the press work,

wherein the tab is devoid of a line pattern extending in a width direction thereof and delimiting one side of the tab from the other side by a height.

14. The electrode sheet of claim 13, wherein the tab comprises a pattern formed on a surface thereof, and wherein the pattern comprises a depth continuously changing depending on a distance to the coated portion of the electrode sheet.

15. The electrode sheet of claim 14, wherein the depth of the pattern is shallower at a portion closer to the coated portion than at a portion farther from the coated portion.

**Amended claims in accordance with Rule 137(2) EPC.**

1. An apparatus (20) for roll-pressing an electrode sheet (100), wherein the electrode sheet (100) has a coated portion (120) in the middle along its width, extending in a longitudinal direction thereof and uncoated portions (110) respectively positioned at both sides of the coated portion (120), wherein the apparatus (20) comprises:

a stage (23) on which the electrode sheet (100) is to be placed; and

a tab press roll (22) configured to roll over one of the uncoated portions (110) of the electrode sheet (100), for executing press work,

wherein the tab press roll (22) has a concave-convex pattern on a surface thereof contacting the electrode sheet (100) during the press work, wherein the tab press roll (22) is configured, during the press work, to form a preset angle ($\theta 2$) with respect to the stage (23), such that the tab press roll (22) exerts less pressure at a side of the uncoated portion (110) closer to the coated portion (120) than the other side distant from the coated portion (120).

2. The apparatus (20) of claim 1, wherein the tab press roll (32) has a truncated cone shape.

3. The apparatus (20) of claim 1, wherein the tab press roll (42) has a cylindrical shape and is configured to, during the press work, be applied on the electrode sheet (100) maintaining the preset angle ($\theta 2$) with respect to the stage (23).

4. The apparatus (20) of any one of the preceding claims, wherein a side of the tab press roll (22) to be positioned closest to the coated portion (120) during the press work is rounded or chamfered.

5. The apparatus (20) of any one of the preceding claims, further comprising another tab press roll (52) for tab-pressing the uncoated portion (110) of the electrode sheet (100) from an opposite side of the tab press roll (22), wherein the tab press roll (22) and the another tab press roll (52) are configured to engage each other having the electrode sheet (100) interposed therebetween.

6. The apparatus (20) of claim 5, wherein the another tab press roll (52) is configured, during the press work, to form a preset angle ($\theta 2$) with respect to the stage (23), such that the another tab press roll (52) exerts less pressure at a side of the uncoated portion (110) closer to the coated portion (120) than the other side distant from the coated portion (120).

7. A method for roll-pressing an electrode sheet (100), wherein the electrode sheet (100) has a coated portion (120) in the middle along its width, extending in a longitudinal direction thereof and uncoated portions (110) respectively positioned at both sides of the coated portion (120), wherein the method comprising:

placing the electrode sheet (100) on a stage (23); and

executing press work by roll pressing one of the uncoated portions (110) of the electrode sheet (100) by a tab press roll (22), wherein during the press work, the tab press roll (22) imparts a concave-convex pattern on the uncoated portion (110) of the electrode sheet (100),

wherein during the press work, the tab press roll (22) is applied on the electrode sheet (100)

forming a preset angle (θ2) with respect to the stage (23), such that the tab press roll (22) exerts less pressure at a side of the uncoated portion (110) closer to the coated portion (120) than the other side distant from the coated portion (120).

8. The method of claim 7, wherein the tab press roll (32) has a truncated cone shape and, during the press work, the tab press roll (32) is applied on the electrode sheet with its rotational axis parallel with the stage (23).

9. The method of claim 8, wherein the tab press roll (42) has a cylindrical shape and, during the press work, the tab press roll (42) is applied on the electrode sheet (100) with its rotational axis maintaining the preset angle (θ2) with respect to the stage (23).

10. The method of any one of the preceding claims, further comprising:

executing press work by roll pressing the uncoated portion (110) of the electrode sheet (100) using another tab press roll (52) from an opposite side of the tab press roll (22), wherein the tab press roll (22) and the another tab press roll (52) engage each other having the electrode sheet (100) interposed therebetween, and
wherein during the press work, the another tab press roll (52) is applied on the electrode sheet (100) forming a preset angle (θ2) with respect to the stage (23), such that the another tab press roll (52) exerts less pressure at a side of the uncoated portion (110) closer to the coated portion (120) than the other side distant from the coated portion (120).

11. An electrode sheet (100) manufactured by the method of claims 7 to 10, comprising

a coated portion (120) in the middle along its width, extending in a longitudinal direction thereof,
uncoated portions (110) respectively positioned at both sides of the coated portion (120), and
a tab formed of the uncoated portion (110), having been subject to the press work,
wherein the tab comprises a pattern formed on a surface thereof, and
wherein the pattern comprises a depth continuously changing depending on a distance to the coated portion (120) of the electrode sheet (100), and the depth of the pattern is shallower at a portion closer to the coated portion (120) than at a portion farther from the coated portion (120).

Fig. 1

10

100

12(a)    120    110

11    12(b)

Roll Pressing Direction

Fig. 2

11

120

12    110

Fig. 3

Fig. 4

## Fig. 5

(a)

(b)

## Fig. 6

Fig. 7

32

$\theta 3$

110    23

(a)

L

32

110

$\theta 4$

H

23

(b)

Fig. 8

Fig. 9

Roll Pressing Direction

# Fig. 10

(A)

(B)

(C)

| | Europäisches Patentamt European Patent Office Office européen des brevets | **EUROPEAN SEARCH REPORT** | **Application Number** EP 24 21 1757 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2024 039260 A (TOYOTA MOTOR CORP) 22 March 2024 (2024-03-22) * figures 2a-2e * | 1-15 | INV. H01M4/04 |
| X | JP 2023 094978 A (TOYOTA MOTOR CORP) 6 July 2023 (2023-07-06) * figures 3,4a-4b,5 * | 1,8,13 | |
| A | WO 2022/245047 A1 (LG ENERGY SOLUTION LTD [KR]) 24 November 2022 (2022-11-24) * claims 1-6, 10-14,16; figures 1-9 * | 1-12 | |
| A | CN 114 375 513 B (LG NEW ENERGY FOR JOINT STOCK AGENCY) 19 July 2024 (2024-07-19) * claims 1,6-7,9-11; figures 1-5 * | 1-12 | |
| A | KR 2016 0141448 A (LG CHEMICAL LTD [KR]) 9 December 2016 (2016-12-09) * claims 1-15; figures 1-6 * | 1-12 | |

| | TECHNICAL FIELDS SEARCHED (IPC) |
|---|---|
| | H01M |

The present search report has been drawn up for all claims

| Place of search | Date of completion of the search | Examiner |
|---|---|---|
| Munich | 25 March 2025 | Forciniti, Marco |

EPO FORM 1503 03.82 (P04C01)

## ANNEX TO THE EUROPEAN SEARCH REPORT
## ON EUROPEAN PATENT APPLICATION NO.

EP 24 21 1757

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | | | Publication date | Patent family member(s) | | | Publication date |
|---|---|---|---|---|---|---|---|
| JP 2024039260 | A | | 22-03-2024 | NONE | | | |
| JP 2023094978 | A | | 06-07-2023 | NONE | | | |
| WO 2022245047 | A1 | | 24-11-2022 | CN | 219696674 | U | 15-09-2023 |
| | | | | DE | 212022000090 | U1 | 23-06-2023 |
| | | | | KR | 20210144585 | A | 30-11-2021 |
| | | | | KR | 20210144586 | A | 30-11-2021 |
| | | | | US | 2023420633 | A1 | 28-12-2023 |
| | | | | WO | 2022245047 | A1 | 24-11-2022 |
| CN 114375513 | B | | 19-07-2024 | CN | 114375513 | A | 19-04-2022 |
| | | | | EP | 4024499 | A1 | 06-07-2022 |
| | | | | US | 2022285665 | A1 | 08-09-2022 |
| | | | | WO | 2021235917 | A1 | 25-11-2021 |
| KR 2016141448 | A | | 09-12-2016 | NONE | | | |

EPO FORM P0459

For more details about this annex : see Official Journal of the European Patent Office, No. 12/82